Europäisches Patentamt

European Patent Office

Office européen des brevets

(19)

(11) **EP 1 081 505 A1**

(12) **DEMANDE DE BREVET EUROPEEN**

(43) Date de publication:
**07.03.2001 Bulletin 2001/10**

(51) Int Cl.$^7$: **G01S 13/28**

(21) Numéro de dépôt: **99117551.4**

(22) Date de dépôt: **06.09.1999**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **CSEM**
**Centre Suisse d'Electronique et de Microtechnique S.A.**
**2007 Neuchâtel (CH)**

(72) Inventeur: **Khaled, Bettaieb**
**2068 Hauterive (CH)**

(74) Mandataire: **Ravenel, Thierry Gérard Louis et al**
**I C B,**
**Ingénieurs Conseils en Brevets SA,**
**7, rue des Sors**
**2074 Marin (CH)**

(54) **Dispositif numérique de corrélation et procédé de corrélation pour systèmes télémétriques**

(57)   Il est décrit un procédé de corrélation ainsi qu'un dispositif numérique de corrélation permettant de détecter l'occurrence d'une séquence codée de référence comprenant N éléments de code dans un signal de réception échantillonné. Le signal de réception est échantillonné à une fréquence égale à d fois la fréquence de codage de la séquence de référence, et d x Nd valeurs de corrélation sont produites pour d x Nd retards successifs du signal de réception, Nd étant un nombre inférieur au nombre N d'éléments de code. Chaque valeur de corrélation, pour un retard donné du signal de réception, est obtenue, selon la présente invention, au terme d'une pluralité d'opérations de corrélation au cours desquelles sont produites des valeurs de corrélation partielle couvrant des portions de code comprenant Nd éléments de code successifs de la séquence de référence.

Fig. 2

**Description**

La présente invention concerne le domaine des systèmes télémétriques, notamment les systèmes de mesure de distances. Plus particulièrement, la présente invention est relative à un dispositif numérique de corrélation, utilisé dans de tels systèmes télémétriques, permettant de détecter l'occurrence d'une séquence codée de référence dans un signal de réception échantillonné, cette occurrence permettant notamment de déterminer la distance d'une cible. La présente invention porte également sur un procédé de corrélation.

Les systèmes télémétriques de mesure de distances basés sur une compression du signal comprennent ordinairement un moyen d'émission d'un signal modulé au moyen d'une séquence codée de référence, une première antenne adaptée pour diriger l'énergie du signal en direction d'une cible, une seconde antenne adaptée pour recevoir l'énergie réfléchie par la cible, et un dispositif de corrélation permettant de déterminer la quantité de retard qui s'est produite sur le signal de réception, et ainsi la distance de la cible. Plus spécifiquement, ce retard est déterminé par corrélation de la séquence codée de référence avec le signal de réception pour un ensemble de retards de ce dernier. La présence d'un pic de corrélation parmi les valeurs de corrélation calculées permet d'identifier le retard correspondant à la distance de la cible.

La technique de modulation du signal typiquement employée dans de tels systèmes télémétriques est dénommée modulation à étalement de spectre, ou "spread spectrum modulation" en terminologie anglo-saxonne. Cette technique de modulation consiste à "étaler" la largeur de bande du signal afin, notamment, de minimiser la sensibilité de ce dernier au bruit blanc ou au brouillage, et trouve ses applications dans des domaines variés tels que la télémétrie, les systèmes radar ou encore les télécommunications. En particulier, cette technique de modulation est appliquées aux systèmes télémétriques, tels que les systèmes de mesure de distances concernés par la présente invention.

Diverses techniques de modulation avec étalement de spectre sont connues de l'homme du métier. En particulier, on connaît sous la dénomination "modulation avec étalement de spectre en séquence directe" (direct sequence spread spectrum modulation) ou "modulation avec étalement de spectre en séquence pseudo-aléatoire" (pseudo-noise spread spectrum modulation), une technique consistant à moduler le signal émis en direction de la cible au moyen d'une séquence codée pseudo-aléatoire. La présente invention s'intéresse essentiellement à ce type de technique de modulation.

L'utilisation de séquences pseudo-aléatoires dans des applications de télémétrie a principalement été appliquée à la télémétrie longue distance. Des exemples de ces applications sont par exemple le système GPS ou les systèmes d'analyse atmosphérique. Ceci s'explique principalement par le fait que la résolution de ces systèmes, en termes de distance, est directement liée à la fréquence d'échantillonnage du signal de réception. Pour des applications à courtes distances, des résolutions plus élevées sont nécessaires et, en conséquence, des fréquences d'échantillonnages supérieures nécessitant une implémentation matérielle du système très rapide.

Les corrélateurs numériques actuellement disponibles sur le marché ont des limitations à la fois en termes de vitesse de corrélation et de longueur de code. En particulier, afin d'implémenter un tel système télémétrique de mesure de distances, les corrélateurs doivent disposer en complément d'une fonction parallèle de détection de pic adaptée pour détecter les valeurs de corrélation pour différents retards du signal de réception. Cette fonction est généralement réalisée au moyen de circuits spécifiques qui, cependant, ne peuvent opérer à la vitesse requise pour des applications à courtes distances.

Il est également possible d'utiliser un détecteur de pic sériel, encore appelé "sliding correlator", mais le temps d'acquisition du système, c'est-à-dire le temps nécessaire pour trouver le pic de corrélation, est bien trop long et rend donc l'utilisation d'un tel détecteur de pic inadaptée pour les applications de mesure de distances.

Un but de la présente invention est ainsi de proposer un dispositif numérique de corrélation capable d'opérer aux vitesses de corrélation élevées requises pour les applications à courtes distances.

Un autre but de la présente invention est de proposer un dispositif numérique dont l'architecture est sensiblement indépendante de la longueur de code de la séquence de référence utilisée pour la corrélation.

A cet effet, la présente invention a pour objet un dispositif numérique de corrélation dont les caractéristiques sont énumérées à la revendication 1.

Des variantes de ce dispositif numérique de corrélation font l'objet des revendications dépendantes.

La présente invention a par ailleurs pour objet un procédé de corrélation novateur dont les caractéristiques sont énumérées à la revendication 5.

Un avantage du dispositif de corrélation selon la présente invention réside dans le fait que son architecture, simple de réalisation, permet son utilisation à des fréquences d'échantillonnage plus élevées que ce qui était préalablement possible avec les dispositifs de corrélation de l'art antérieur, et donc une utilisation parfaitement adaptée aux systèmes télémétriques courtes distances.

Cette architecture simple permet par ailleurs de réduire sensiblement les coûts du dispositif de corrélation, et, par là même, les coûts du système télémétrique dans lequel celui-ci est utilisé.

D'autres avantages et particularités de l'invention seront explicités plus en détail à la lumière de la description qui suit, à l'aide des dessins annexés ci-après, donnés à titre purement illustratifs et non limitatifs, dans lesquels :

- la figure 1 montre un exemple schématique d'une implémentation directe d'un corrélateur numérique parallèle permettant de corréler un signal de réception échantillonné avec une séquence codée de référence;
- la figure 2 montre un premier mode de réalisation d'un dispositif numérique de corrélation selon la présente invention; et
- la figure 3 montre un autre mode de réalisation d'un dispositif numérique de corrélation selon la présente invention.

Le dispositif de corrélation qui fait l'objet de la présente invention se présente schématiquement sous la forme d'un corrélateur parallèle adapté pour corréler un signal de réception échantillonné avec une séquence codée de référence comportant N éléments de code, aussi dénommés "chips". Exprimée sous forme mathématique, ce dispositif de corrélation effectue la fonction de corrélation suivante :

$$\sum_{i=1}^{N} r_i c_i \qquad\qquad (1)$$

où $r_i$ désigne un échantillon du signal de réception et $c_i$ représente un élément de code de la séquence de référence.

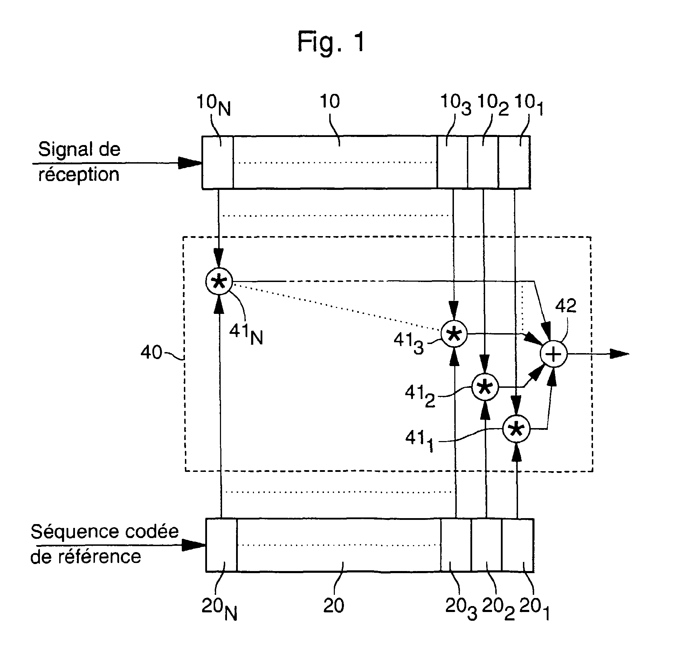

La figure 1 présente un exemple schématique d'une implémentation directe d'un tel dispositif de corrélation. Ce dispositif comporte ainsi des premier et second registres, indiqués par les références numériques 10 et 20, destinés respectivement à recevoir des échantillons du signal de réception et les éléments de code de la séquence codée de référence avec laquelle le signal de réception doit être corrélé. Ces registres comportent, dans cet exemple schématique, un nombre de cellules égal au nombre d'éléments de code de la séquence codée de référence, à savoir N éléments de code. Ces cellules sont respectivement indiquées par les références numériques $10_1$ à $10_N$ et $20_1$ à $20_N$.

Ce dispositif de corrélation comporte en outre des moyens de calcul 40 couplés aux premier et second registres 10 et 20 afin de produire la fonction de corrélation exprimée ci-dessus en (1). Ces moyens de calcul 40 comprennent ainsi, dans cette implémentation directe, N multiplieurs $41_1$ à $41_N$ couplés chacun à une cellule du premier registre 10 et une cellule correspondante du second registre 20, ainsi qu'un additionneur 42 à N entrées couplé aux sorties des N multiplieurs $41_1$ à $41_N$, Comme on le comprendra aisément, l'additionneur fournit, à sa sortie, une valeur de corrélation définie par l'expression mathématique (1) ci-dessus.

On comprendra aisément que cette implémentation directe nécessite des ressources matérielles importantes qui sont proportionnelles à la longueur N de la séquence codée de référence. L'additionneur 42 qui comporte un nombre important d'entrées constitue en particulier l'élément le plus limitatif en termes de vitesse. La solution apportée par la présente invention permettra notamment de résoudre ce problème.

Selon la présente invention, afin d'accroître la résolution du système télémétrique, la fréquence d'échantillonnage du signal de réception est fixée à un multiple de la fréquence de codage (ou "chip rate") de la séquence codée de référence. Ceci implique que l'expression mathématique (1) de la fonction de corrélation devient alors :

$$\sum_{j=1}^{N} \left( \sum_{i=(j-1)d+1}^{jd} r_i \right) c_j \qquad\qquad (2)$$

où d désigne le facteur de multiplication de la fréquence d'échantillonnage du signal de réception par rapport à la fréquence de codage de la séquence de référence.

On notera par ailleurs qu'en fixant une distance maximale de mesure du système télémétrique, seul un nombre limité de valeurs de corrélation est déterminant pour permettre la détection d'un pic de corrélation. En effet, pour une distance maximale de mesure déterminée, le pic de corrélation n'apparaîtra, dans la situation extrême, qu'après un retard maximal correspondant à cette distance maximale de mesure.

Prenons à titre d'exemple un système télémétrique employant un laser modulé en impulsions à une fréquence de codage ("chip rate") de 20 MHz et une distance maximale de mesure définie à 200 mètres, le nombre de retards relevants, exprimés en chips, s'élève à Nd = 27. En admettant une fréquence d'échantillonnage d fois plus élevée que la fréquence de codage, cela revient à dire que seules d x Nd valeurs de corrélation doivent être calculées, c'est-à-dire les valeurs de corrélation pour d x Nd retards successifs du signal de réception. On notera que le nombre Nd de retards relevants exprimés en chips est défini comme étant inférieur au nombre total N de chips composant la séquence codée de référence.

Il est à noter que le fait de fixer une distance maximale de mesure du système télémétrique ne limitera nullement la portée de ce dernier. En effet, il est parfaitement envisageable de considérer, non pas les d x Nd premiers retards du signal de réception, mais d x Nd retards successifs de ce signal considérés à partir d'un retard fixe déterminé. Il sera ainsi possible d'effectuer des mesures sur une distance donnée, par exemple 200 mètres, au delà d'une distance fixe déterminée.

D'une manière générale, le dispositif de corrélation selon la présente invention est agencé pour produire des valeurs de corrélation correspondant à d x Nd retards successifs du signal de réception. Ces valeurs de corrélation sont produites en plusieurs opérations de corrélation, dite opérations de corrélation partielle, au cours desquelles le signal de réception est corrélé avec des portions de code comprenant Nd éléments de code successifs de la séquence de référence. En d'autres termes, l'opération de corrélation est décomposée en une pluralité d'opérations de corrélation partielle ne couvrant que des portions de la séquence codée de référence. Comme on le verra plus en détail dans la suite de la présente description, cette solution permet de limiter grandement les ressources matérielles nécessaires pour calculer la fonction de corrélation, à savoir notamment le nombre de multiplieurs ainsi que le nombre d'entrées de l'additionneur.

Le principe de fonctionnement du dispositif de corrélation selon la présente invention est ainsi le suivant. Pour chacun des d x Nd retards du signal de réception, le dispositif de corrélation selon la présente invention produit, durant une première opération de corrélation partielle, une première valeur de corrélation, dite valeur de corrélation partielle, couvrant les Nd premiers éléments de codes de la séquence de référence. Cette première valeur de corrélation partielle est accumulée pour être ultérieurement additionnée à la prochaine valeur de corrélation partielle produite pour chaque retard correspondant.

Au cours d'une seconde opération de corrélation partielle, une seconde valeur de corrélation partielle couvrant les Nd éléments de codes suivants est produite de manière analogue, pour chaque retard du signal de réception, puis additionnée à la première valeur de corrélation correspondante qui avait été accumulée lors de la séquence précédente.

Une pluralité d'opérations de corrélation partielle se succèdent ainsi afin de produire, au terme d'un nombre déterminé d'opérations, la valeur de corrélation totale pour chacun des d x Nd retards successifs considérés.

Le nombre de ces opérations dépend du nombre N d'éléments de code de la séquence de référence ainsi que du nombre Nd de retards relevants exprimés en chips. Plus spécifiquement, le nombre d'opérations de corrélation partielle à exécuter est égal au rapport ppmc(N,Nd)/Nd, où ppmc(N,Nd) désigne le plus petit multiple commun des nombres N et Nd.

Par ailleurs, les portions de Nd éléments de code successifs sélectionnées pour calculer les valeurs de corrélation partielle débutent par la portion couvrant les Nd premiers éléments de code de la séquence de référence et se terminent par la portion couvrant les Nd derniers éléments de code de cette séquence. Chaque élément de code de la séquence de référence est ainsi corrélé avec le signal de réception un nombre de fois égal au rapport ppmc(N, Nd)/N.

A titre d'exemple, si le nombre N d'éléments de code formant la séquence de référence est divisible par le nombre Nd de retards relevants, exprimés en chips, il sera nécessaire d'effectuer N/Nd opérations de corrélation partielle pour aboutir à la valeur de corrélation totale couvrant la séquence de référence complète. Dans ce cas, chaque élément de code de la séquence de référence n'est corrélé qu'une seule fois avec le signal de réception.

Par contre, si la séquence codée de référence comprend un nombre premier d'éléments de code, c'est-à-dire un nombre N indivisible par Nd, il sera nécessaire d'effectuer N opérations de corrélation partielle pour aboutir à une valeur de corrélation totale. Dans ce cas, chaque élément de code de la séquence de référence est corrélé Nd fois avec le signal de réception, et les valeurs de corrélation totales obtenues sont des multiples (Nd fois) des valeurs de corrélation couvrant la séquence de référence complète. En d'autres termes, l'équivalent de Nd opérations de corrélation couvrant la séquence de référence complète auront été effectuées.

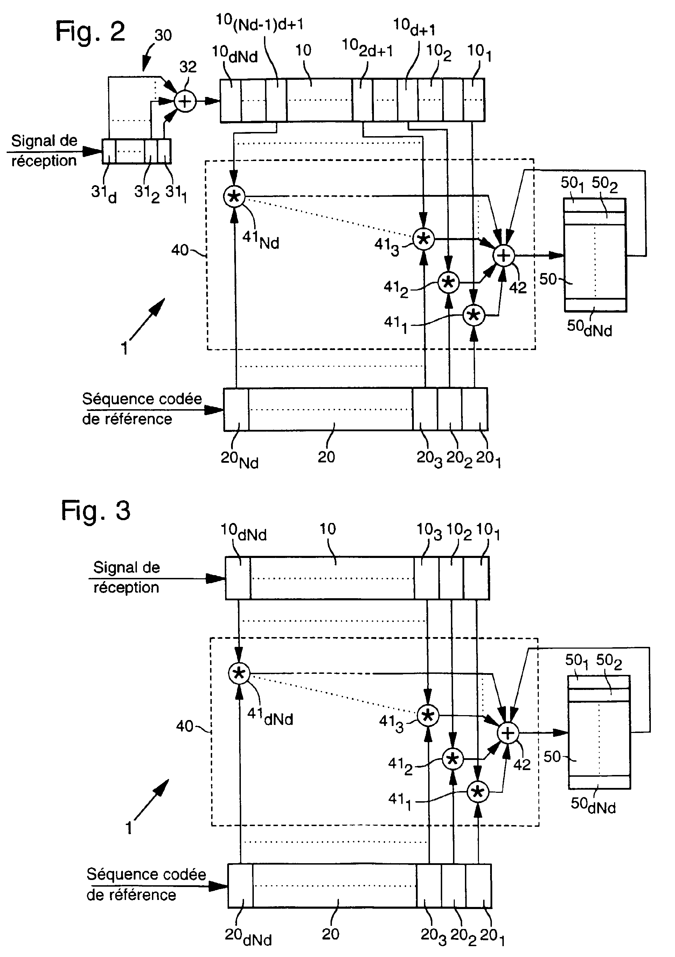

On décrira maintenant au moyen de la figure 2 un mode de réalisation d'un dispositif de corrélation selon la présente invention permettant de remplir les fonctions qui viennent d'être mentionnées. Cette figure montre ainsi schématiquement un dispositif de corrélation, indiqué généralement par la référence numérique 1, comportant des premier et second registres 10 et 20 destinés respectivement à charger des échantillons du signal de réception et des éléments de code de la séquence de référence. Selon ce mode de réalisation, le dispositif de corrélation 1 comporte en outre un filtre sommateur 30 disposé à l'entrée du premier registre 10 et permettant de prétraiter le signal de réception échantillonné avant son chargement dans le premier registre 10. Le dispositif de corrélation 1 comporte de plus des moyens de calcul 40, couplés aux premier et second registres 10 et 20, pour produire des valeurs de corrélation entre la séquence codée de référence et le signal de réception, ainsi qu'un moyen d'accumulation 50 permettant d'accumuler les valeurs de corrélation correspondant à d x Nd retards successifs du signal de réception.

Plus spécifiquement, selon ce mode de réalisation, le premier registre 10 comporte d x Nd cellules indiquées de manière générique par les références numériques $10_a$, l'indice a prenant les valeurs 1 à d x Nd, et le second registre 20 comporte Nd cellules indiquées de manière générique par les références numériques $20_b$, l'indice b prenant les valeurs 1 à Nd. Les références numériques $10_1$ et $20_1$ indiquent ainsi, par exemple, les premières cellules des, respectivement, premier et second registres 10 et 20.

Le filtre sommateur 30, disposé à l'entrée du premier registre 10, a pour but de prétraiter les échantillons du signal de réception pour que ceux-ci puissent être corrélés avec les éléments de code de la séquence de référence. En effet, le signal de réception étant échantillonné à une fréquence d fois supérieure à la fréquence de codage de la séquence de référence, il convient de sommer des échantillons successifs du signal de réception sur une période correspondant à la période d'un élément de code, à savoir d'effectuer l'addition de d échantillons successifs du signal de réception. Ce filtre sommateur 30 peut être réalisé sous la forme d'un registre comportant d cellules, indiquées dans la figure 2 par les références $31_1$ à $31_d$, et un additionneur 32 à d entrées connectées respectivement aux cellules $31_1$ à $31_d$.

Dans l'exemple de la figure 2, le filtre sommateur 30 permet ainsi de charger le premier registre 10 avec des éléments, nommés par la suite "éléments de signal", formés de la somme de d échantillons successifs du signal de réception.

Initialement, c'est-à-dire pour le premier retard du signal de réception, ou "retard zéro", le premier registre 10 est ainsi chargé avec d x Nd éléments de signal formés à partir des sommes suivantes :

$$\sum_{i=k}^{k+d-1} r_i \qquad (3)$$

où l'indice k représente l'indice de la cellule dans le premier registre 10 et prend les valeurs 1 à d x Nd.

Plus spécifiquement, on notera que les Nd cellules du premier registre 10, prises à partir de la première cellule $10_1$ avec une périodicité de d cellules, à savoir les cellules $10_1$, $10_{d+1}$, $10_{2d+1}$, ..., $10_{(Nd-1)d+1}$ contiennent initialement, pour le retard zéro du signal de réception, les sommes suivantes, dont la formulation est dérivée de l'expression mathématique (3) ci-dessus :

$$\sum_{i=(j-1)d+1}^{jd} r_i \qquad (4)$$

où l'indice j prends les valeurs 1 à Nd.

Pour le retard zéro, la première cellule $10_1$ contient ainsi initialement l'élément de signal formé de la somme des échantillons $r_1$ à $r_d$, la cellule $10_{d+1}$, l'élément de signal formé de la somme des échantillons $r_{d+1}$ à $r_{2d}$, et ainsi de suite jusqu'à la cellule $10_{(Nd-1)d+1}$ qui contient l'élément de signal formé de la somme des échantillons $r_{(Nd-1)d+1}$ à $r_{dNd}$.

En d'autres termes, les cellules $10_1$, $10_{d+1}$, $10_{2d+1}$, ..., $10_{(Nd-1)d+1}$ du premier registre 10 contiennent initialement les Nd éléments de signal couvrant les d x Nd premiers échantillons successifs du signal de réception nécessaires au calcul de la première valeur de corrélation partielle pour le retard zéro.

En opérant un décalage d'une cellule dans le premier registre 10, ces mêmes cellules contiendront les Nd éléments de signal successifs nécessaires au calcul de la valeur de corrélation partielle pour le retard suivant. Après d x Nd décalages dans le premier registre 10, ces cellules contiendront alors Nd éléments de signal successifs nécessaires au calcul de la seconde valeur de corrélation partielle pour le retard zéro.

Les moyens de calcul 40 comprennent Nd multiplieurs indiqués par les références numériques $41_1$ à $41_{Nd}$. Ces multiplieurs sont respectivement couplés, d'une part, aux Nd cellules $10_1$, $10_{d+1}$, $10_{2d+1}$, ...., $10_{(Nd-1)d+1}$ du premier registre 10, et, d'autre part, aux cellules $20_1$ à $20_{Nd}$ du second registre 20.

Les moyens de calcul 40 comprennent en outre un additionneur 42 permettant, d'une part, de sommer les sorties des Nd multiplieurs $41_1$ à $41_{Nd}$ et ainsi former une valeur de corrélation partielle entre Nd éléments de code de la séquence de référence chargés dans le second registre 20 et Nd éléments de signal couvrant d x Nd échantillons successifs du signal de réception chargés dans le premier registre 10. L'additionneur 42 permet, d'autre part, d'accumuler la valeur de corrélation partielle ainsi produite avec une valeur de corrélation partielle précédemment stockée dans le moyen d'accumulation 50. Cet additionneur 42 comporte ainsi Nd+1 entrées, Nd d'entre elles étant connectées aux sorties des multiplieurs $41_1$ à $41_{Nd}$ alors que la dernière est connectée en sortie du moyen d'accumulation 50.

Le moyen d'accumulation 50 est disposé en sortie de l'additionneur 42 et permet de stocker et accumuler les valeurs de corrélation partielles correspondant à d x Nd retards successifs du signal de réception. Ce moyen d'accumulation 50 comporte ainsi d x Nd sections mémoires distinctes, indiquées par les références numériques $50_1$ à $50_{dNd}$ destinées à accumuler les valeurs de corrélation partielle successivement produites par les moyens de calcul 40 lors de chaque opération de corrélation partielle. Chacune des sections mémoires est adressée tour à tour en fonction du retard du signal de réception considéré, et une nouvelle valeur de corrélation formée de l'addition de la valeur de corrélation partielle précédente et de la valeur de corrélation partielle produite par les moyens de calcul 40 est accumulée dans cette section mémoire.

Le moyen d'accumulation 50 est préférablement une mémoire RAM, mais peut alternativement être tout autre moyen de mémorisation analogue adapté pour réaliser la fonction qui est décrite dans la présente description.

La figure 3 présente une alternative au dispositif de corrélation illustré à la figure 2. Des références numériques identiques ont été utilisées pour indiquer les éléments commun à ce dispositif et au premier mode de réalisation de la figure 2.

Le dispositif de corrélation de la figure 3 ne comporte pas de filtre sommateur 30. Dans ce mode de réalisation, les échantillons du signal de réception sont chargés directement dans le premier registre 10. Le second registre 20 comporte dans ce cas un nombre plus important de cellules pour charger Nd éléments de code successifs de la séquence de référence. Ce second registre comporte ici d x Nd cellules, indiquées ici par les références numériques $20_1$ à $20_{dNd}$, chacun des Nd éléments de code chargé étant répété dans d cellules successives du second registre 20.

Par ailleurs, les moyens de calculs comportent d x Nd multiplieurs, indiqués par les références numériques $41_1$ à $41_{dNd}$, couplés d'une part, aux d x Nd cellules $10_1$ à $10_{dNd}$ du premier registre 10 et, d'autre part, aux d x Nd cellules $20_1$ à $20_{dNd}$ du second registre 20. En conséquence, l'additionneur 42 comporte ici d x Nd + 1 entrées, dont d x Nd sont connectées aux sorties des multiplieurs $41_1$ à $41_{dNd}$.

On remarquera donc que cette alternative est plus gourmande en ressources matérielles mais remplit néanmoins une fonction tout a fait similaire au dispositif illustré à la figure 2, à savoir produire des valeurs de corrélation correspondant à d x Nd retards successifs du signal de réception, ces valeurs de corrélation étant produites en plusieurs opérations de corrélation partielle au cours desquelles le signal de réception est corrélé avec des portions de Nd éléments de code successifs de la séquence de référence.

En se référant à nouveau à la figure 2, on décrira maintenant de manière détaillée, à l'aide d'un exemple pratique, le déroulement des opérations permettant de produire les valeurs de corrélation couvrant les N éléments de code de la séquence de référence au moyen du dispositif de corrélation selon la présente invention.

A titre d'illustration, nous admettrons que la séquence de référence comprend N = 1023 éléments de code, que la fréquence de codage de la séquence de référence est de 20 MHz et que la fréquence d'échantillonnage est de 80 MHz, soit d = 4 fois plus élevée que la fréquence de codage.

Nous admettrons en outre que la distance maximale de mesure du système est fixée à 200 mètres, de sorte que Nd = 27 retards, exprimés en chips doivent être examinés, c'est-à-dire d x Nd = 108 retards en termes de périodes d'échantillonnage.

Le dispositif numérique de corrélation illustré à la figure 2 comprend alors un premier registre (10) à 108 cellules, un second registre (20) à 27 cellules, un filtre sommateur (30) à 4 cellules, 27 multiplieurs ($41_1$ à $41_{27}$), un additionneur (42) à 28 entrées, et un moyen d'accumulation comprenant 108 sections mémoires ($50_1$ à $50_{108}$) chacune agencée pour stocker l'une des 108 valeurs de corrélation produites. Les multiplieurs sont couplés, d'une part, aux cellules $10_1$, $10_5$, $10_9$, ..., $10_{105}$ du premier registre, et, d'autre part, aux cellules $20_1$ à $20_{27}$ du second registre.

Le nombre d'opérations de corrélation partielle à effectuer s'élève, dans cet exemple, à 341 opérations au terme desquelles chaque élément de code de la séquence de référence aura été corrélé à 9 reprises avec le signal de réception.

Le déroulement des opérations est donc décomposé, dans cet exemple, en 341 opérations de corrélation partielles au cours desquelles le signal de réception est corrélé avec des portions de code comprenant Nd = 27 éléments de code successifs de la séquence de référence

Lors de la première opération de corrélation, le premier registre 10 est initialement chargé avec 108 éléments de signal formés des sommes de quatre échantillons successifs du signal de réception. Le second registre 20 est chargé, quant à lui, avec les 108 premiers éléments de code de la séquence de référence.

Les moyens de calcul 40 produisent alors une première valeur de corrélation partielle pour le retard zéro, et cette valeur de corrélation partielle est accumulée dans la première section mémoire $50_1$ du moyen d'accumulation 50.

Un décalage d'une cellule est opéré dans le premier registre 10 afin que les éléments de signal correspondant au retard suivant soient présentés aux entrées des multiplieurs $41_1$ à $41_{27}$. Les moyens de calcul 40 produisent alors une première valeur de corrélation partielle pour le retard suivant, et cette valeur de corrélation partielle est accumulée dans la seconde section mémoire $50_2$ du moyen d'accumulation 50.

Des décalages successifs du premier registre 10 sont ainsi opérés à chaque période d'échantillonnage afin de parcourir la totalité des 108 retards examinés. Après 108 décalages du premier registre 10, le moyen d'accumulation 50 aura accumulée une première valeur de corrélation partielle pour chacun de 108 retards, et les cellules $10_1$, $10_5$, $10_9$, ..., $10_{105}$ du premier registre 10 contiendront les 27 éléments de signal suivants correspondant au retard zéro.

C'est à ce moment que débute, à proprement parler, la seconde opération de corrélation partielle. Le second registre 20 est alors chargé avec les 27 prochains éléments de code de la séquence de référence. Une seconde valeur de corrélation partielle est ainsi calculée, pour chaque retard, de manière analogue à ce qui à été présenté précédemment, et accumulée à la première valeur de corrélation partielle déjà stockée dans le moyen d'accumulation 50.

Les opérations de corrélation partielle se succèdent ainsi jusqu'à la 341ème opération de corrélation partielle au cours de laquelle le second registre 20 contient les 27 derniers éléments de code de la séquence de référence. Une dernière valeur de corrélation partielle est ainsi calculée, pour chaque retard, et accumulée à la valeur stockée dans le moyen d'accumulation 50.

Au terme des 341 opérations de corrélation partielle, le moyen d'accumulation 50 contient alors les valeurs de corrélation totale, ou plus exactement des multiples (9 fois) des valeurs de corrélation totale, des 108 retards successifs examinés.

Il ressort de ce qui précède que le dispositif de corrélation selon la présente invention présente ainsi l'avantage de permettre la détermination d'un pic de corrélation avec une résolution élevée sans que ceci ne requière des ressources matérielles importantes.

Ce dispositif permet en outre de produire parallèlement un ensemble de valeurs de corrélation pour d x Nd retards successifs du signal de réception, toutes ces valeurs étant accumulées dans les sections mémoires du moyen d'accumulation. L'utilisateur dispose ainsi d'un ensemble de valeurs permettant non seulement la détection d'un pic de corrélation correspondant à la distance d'une cible, mais éventuellement l'analyse de la nature de l'environnement de la cible ou la détection d'échos multiples.

Par ailleurs, le dispositif selon la présente invention présente l'avantage important d'être sensiblement indépendant de la longueur N de la séquence codée de référence. En effet, seule la capacité du moyen d'accumulation limite la longueur de la séquence de référence, la taille des registres et le nombre d'éléments des moyens de calculs n'étant fixés que par le nombre de retards relevants que l'on désire examiner.

## Revendications

**1.** Dispositif numérique de corrélation permettant de détecter l'occurrence d'une séquence codée de référence comprenant N éléments de code dans un signal de réception échantillonné, ce dispositif comprenant des premier et second registres (10, 20) pour charger respectivement des échantillons successifs dudit signal de réception et des éléments de code de ladite séquence codée de référence, et des moyens de calcul (40) couplés aux dits premier et second registres (10, 20) pour produire des valeurs de corrélation pour un ensemble de retards successifs dudit signal de réception, caractérisé en ce que :

- ledit signal de réception est échantillonné à une fréquence égale à d fois la fréquence de codage de ladite séquence de référence;
- ledit dispositif est agencé pour produit d x Nd valeurs de corrélation correspondant à d x Nd retards successifs dudit signal de réception, Nd étant un nombre inférieur au nombre N d'éléments de code de la séquence de référence, chaque valeur de corrélation, pour un retard donné du signal de réception, étant obtenue au terme d'un nombre déterminé d'opérations de corrélation partielle au cours desquelles lesdits moyens de calcul (40) produisent une valeur de corrélation partielle couvrant des portions de code comprenant Nd éléments de code successifs de la séquence de référence; et
- ledit dispositif comprend en outre un moyen d'accumulation (50), couplé aux moyens de calcul (40), et comprenant d x Nd sections mémoires ($50_1$ à $50_{dNd}$) permettant chacune d'accumuler, lors de chaque opération de corrélation partielle, la valeur de corrélation partielle produite pour un retard du signal de réception.

**2.** Dispositif numérique de corrélation selon la revendication 1, caractérisé en ce que :

- le dispositif comprend en outre un moyen de prétraitement (30) disposé à l'entrée dudit premier registre (10) et effectuant, à chaque période d'échantillonnage, la somme de d échantillons successifs dudit signal de réception, cette somme formant un élément de signal qui est chargé dans ledit premier registre (10);
- ledit premier registre (10) comprend d x Nd cellules ($10_1$ à $10_{dNd}$) permettant de charger d x Nd éléments de signal successifs dudit signal de réception;
- ledit second registre (20) comprend Nd cellules ($20_1$ à $20_{Nd}$) permettant de charger une portion de code comprenant Nd éléments de code successifs de ladite séquence de référence; et
- lesdits moyens de calculs (40) comprennent un additionneur (42) et Nd multiplieurs ($41_1$ à $41_{Nd}$) couplés respectivement, d'une part, à Nd cellules du premier registre (10) choisies à partir de la première cellule dudit registre avec une périodicité de d éléments de signal ($10_1$, $10_{d+1}$, $10_{2d+1}$, ..., $10_{(Nd-1)d+1}$), et, d'autre part, aux Nd cellules ($20_1$ à $20_{Nd}$) du second registre (20), l'additionneur (42) permettant de sommer les sorties desdits multiplieurs ($41_1$ à $41_{Nd}$) et de former ainsi une valeur de corrélation partielle destinée à être accumulée dans la section mémoire correspondante dudit moyen d'accumulation (50).

**3.** Dispositif numérique de corrélation selon la revendication 1, caractérisé en ce que :

- ledit premier registre (10) comporte $d \times Nd$ cellules ($10_1$ à $10_{dNd}$) permettant de charger $d \times Nd$ échantillons successifs dudit signal de récéption;
- ledit second registre (20) comporte $d \times Nd$ cellules ($20_1$ à $20_{dNd}$) permettant de charger une portion de code comprenant $Nd$ éléments de code successifs de ladite séquence de référence, chacun des éléments de code étant répété dans $d$ cellules successives dudit second registre (20); et
- lesdits moyens de calculs (40) comprennent un additionneur (42) et $d \times Nd$ multiplieurs ($41_1$ à $41_{dNd}$) couplés respectivement, d'une part, aux $d \times Nd$ cellules ($10_1$ à $10_{dNd}$) du premier registre (10), et, d'autre part, aux $d \times Nd$ cellules ($20_1$ à $20_{dNd}$) du second registre (20), l'additionneur permettant de sommer les sorties desdits multiplieurs ($41_1$ à $41_{dNd}$) et de former ainsi une valeur de corrélation partielle destinée à être accumulée dans la section mémoire correspondante dudit moyen d'accumulation (50).

**4.** Dispositif numérique de corrélation selon l'une quelconque des revendications précédentes, caractérisé en ce que ledit moyen d'accumulation (50) est une mémoire RAM.

**5.** Procédé de corrélation numérique permettant de détecter l'occurrence d'une séquence codée de référence comprenant $N$ éléments de code dans un signal de réception échantillonné, ce procédé produisant des valeurs de corrélation pour un ensemble de retard successifs dudit signal de réception, caractérisé en ce que :

- ledit signal de réception est échantillonné à une fréquence égale à $d$ fois la fréquence de codage de ladite séquence de référence; et
- $d \times Nd$ valeurs de corrélation sont produites pour $d \times Nd$ retards successifs dudit signal de réception, $Nd$ étant un nombre inférieur au nombre $N$ d'éléments de code de la séquence de référence;

ce procédé comprenant les étapes :

a) sélection d'une portion de code couvrant les $Nd$ premiers éléments de code successifs de la séquence de référence;
b) sélection d'un ensemble d'échantillons du signal de réception correspondant au premier retard;
c) calcul d'une valeur de corrélation partielle entre la portion de code sélectionnée et les échantillons du signal de réception;
d) accumulation de la valeur de corrélation partielle calculée;
e) sélection d'un ensemble d'échantillons du signal de réception correspondant au prochain retard;
f) répétition des étapes c) à e) jusqu'à ce qu'une valeur de corrélation partielle ait été calculée et accumulée pour les $d \times Nd$ retards du signal de réception;
g) sélection d'une portion de code couvrant $Nd$ éléments de codes successifs de la séquence de référence suivant directement la portion de code précédemment sélectionnée; et
h) répétition des étapes b) à g) jusqu'à ce que la portion de code sélectionnée couvre les $Nd$ derniers éléments de code successifs de la séquence de référence.

# Fig. 1

Signal de
réception

$10_N$     10     $10_3$ $10_2$ $10_1$

42

$41_N$

40

$41_3$

$41_2$

$41_1$

Séquence codée
de référence

$20_N$     20     $20_3$ $20_2$ $20_1$

## Fig. 2

Signal de réception

Séquence codée de référence

## Fig. 3

Signal de réception

Séquence codée de référence

**Office européen des brevets**

**RAPPORT DE RECHERCHE EUROPEENNE**

Numéro de la demande

EP 99 11 7551

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | HOLM ERIC D ET AL: "A GPS Fast Acquisition Receiver" NATIONAL TELESYSTEMS CONFERENCE,US,NEW YORK, I.E.E.E, vol. CONF. 1983, 1983, pages 214-218-217, XP002100664 --- | 1-5 | G01S13/28 |
| A | US 5 414 729 A (FENTON PATRICK) 9 mai 1995 (1995-05-09) * Field of the Invention * * colonne 2, ligne 54 - ligne 56 * --- | 1-5 | |
| A | US 5 321 409 A (WALKER W T) 14 juin 1994 (1994-06-14) * figure 4 * ----- | 1-5 | |

| DOMAINES TECHNIQUES RECHERCHES (Int.Cl.7) |
|---|
| G01S H04B |

Le présent rapport a été établi pour toutes les revendications

| Lieu de la recherche | Date d'achèvement de la recherche | Examinateur |
|---|---|---|
| LA HAYE | 8 février 2000 | Ó Donnabháin, C |

**ANNEXE AU RAPPORT DE RECHERCHE EUROPEENNE
RELATIF A LA DEMANDE DE BREVET EUROPEEN NO.**
EP 99 11 7551

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

08-02-2000

| Document brevet cité au rapport de recherche | Date de publication | Membre(s) de la famille de brevet(s) | | Date de publication |
|---|---|---|---|---|
| US 5414729 A | 09-05-1995 | AU | 8137894 A | 13-06-1995 |
| | | CA | 2162926 A | 01-06-1995 |
| | | WO | 9514937 A | 01-06-1995 |
| | | CN | 1128064 A | 31-07-1996 |
| | | JP | 9505404 T | 27-05-1997 |
| | | AT | 187254 T | 15-12-1999 |
| | | AU | 660757 B | 06-07-1995 |
| | | AU | 3197193 A | 29-07-1993 |
| | | CA | 2087909 A | 25-07-1993 |
| | | CN | 1080059 A,B | 29-12-1993 |
| | | DE | 69327119 D | 05-01-2000 |
| | | EP | 0552975 A | 28-07-1993 |
| | | SG | 43672 A | 14-11-1997 |
| | | US | 5390207 A | 14-02-1995 |
| | | US | 5495499 A | 27-02-1996 |
| | | US | 5809064 A | 15-09-1998 |
| | | US | 5734674 A | 31-03-1998 |
| US 5321409 A | 14-06-1994 | EP | 0631153 A | 28-12-1994 |
| | | IL | 110001 A | 16-08-1998 |
| | | JP | 2705901 B | 28-01-1998 |
| | | JP | 7140233 A | 02-06-1995 |
| | | NO | 942431 A | 29-12-1994 |

EPO FORM P0460

Pour tout renseignement concernant cette annexe : voir Journal Officiel de l'Office européen des brevets, No.12/82